**Europäisches Patentamt**

**European Patent Office**

**Office européen des brevets**

(19)

(11) Veröffentlichungsnummer: **0 064 085**
**B1**

(12) # EUROPÄISCHE PATENTSCHRIFT

(45) Veröffentlichungstag der Patentschrift:
**08.01.86**

(51) Int. Cl.⁴: **H 02 J 9/06**

(21) Anmeldenummer: **81103270.5**

(22) Anmeldetag: **30.04.81**

(54) Steuerschaltung für eine Einrichtung zum Kommutieren von einer Wechselspannung auf eine andere.

(43) Veröffentlichungstag der Anmeldung:
**10.11.82 Patentblatt 82/45**

(45) Bekanntmachung des Hinweises auf die Patenterteilung:
**08.01.86 Patentblatt 86/2**

(84) Benannte Vertragsstaaten:
**AT BE CH DE FR GB IT LI**

(56) Entgegenhaltungen:
**DE - A - 1 590 623**
**DE - A - 2 256 251**
**DE - A - 2 420 557**
**US - A - 3 723 750**

(73) Patentinhaber: **Cerciello, Michele, Via Collina 41,
CH-6612 Ascona (CH)**

(72) Erfinder: **Cerciello, Michele, Via Collina 41,
CH-6612 Ascona (CH)**

(74) Vertreter: **Grieskamp, Johannes Peter, Im
Baumgarten 7, CH-8123 Ebmatingen (CH)**

## Beschreibung

Die Erfindung betrifft eine Steuerschaltung für eine Einrichtung zum Kommutieren von Wechselspannungen einer ersten Spannungsquelle auf eine zweite Spannungsquelle mit unterschiedlicher, ein ganzzahliges Verhältnis aufweisender Frequenz, unterschiedlicher Spannungsamplitude und unterschiedlicher Spannungsform.

Einrichtungen zum Kommutieren bzw. Umschalten von einer Wechselspannung auf eine andere sind bekannt. Die Umschaltung erfolgt jedoch nur bei besonderen Bedingungen, wenn die Frequenzen der beiden Wechselspannungen synchron sind und ihre Spannungsamplituden sowie Spannungsformen in jeder Beziehung übereinstimmen. Zur Erfüllung dieser Bedingungen enthalten die bekannten Einrichtungen eine grössere Anzahl von Gerätschaften und Schaltungsteilen, die den gesamten Aufbau komplizieren und in der Herstellung verteuern.

In der DE-A 2 256 251 ist eine solche unterbrechungslose Stromversorgung mit zwei Stromversorgungsquellen gezeigt, bei der die Frequenzen der Wechselspannungen synchron und die Spannungsamplituden sowie die Spannungsformen übereinstimmen müssen.

Die Erfindung hat die Aufgabe, solche Einrichtungen zu verbilligen und vereinfachen. Dies gilt nicht nur für eine Dauerstromversorgungsanlage, sondern auch für die Drehzahlsteuerung von Verbrauchern.

Diese Aufgabe wird durch die im kennzeichnenden Teil des Anspruchs 1 definierte Erfindung gelöst.

Ein Ausführungsbeispiel der Erfindung wird anhand der Zeichnungen näher erläutert. Es zeigen:

Fig. 1 die Anordnung der Steuerschaltung in einer Stromversorgungsanlage;

Fig. 2a, 2b das Schaltschema der Steuerschaltung.

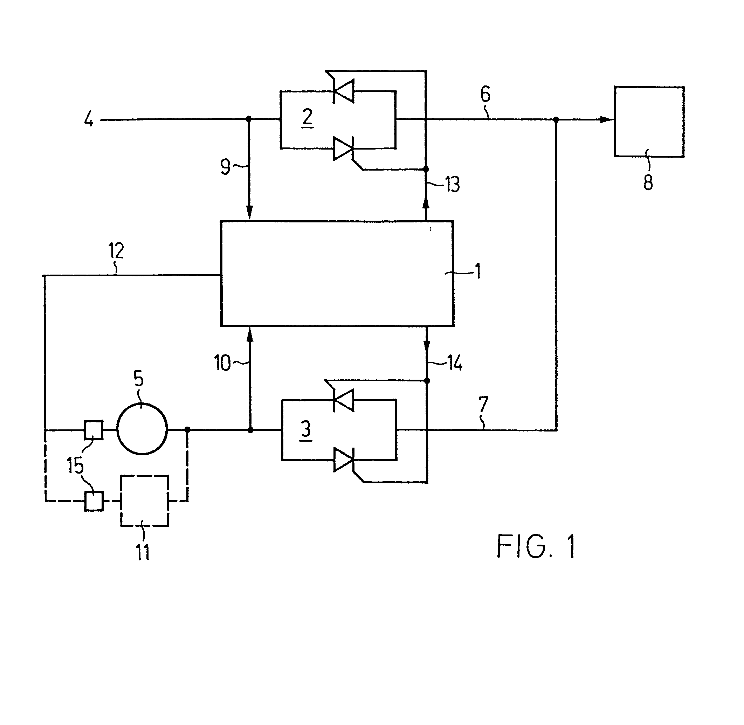

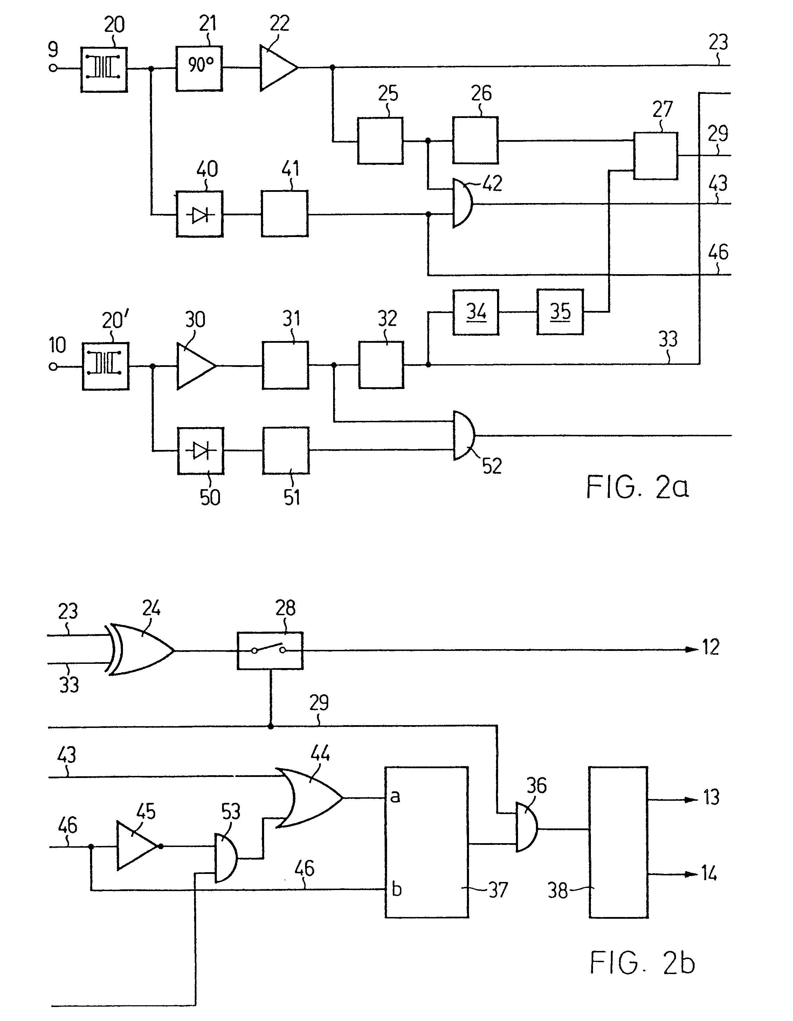

In der Fig. 1 ist die Steuerschaltung 1 zwischen bekannten, antiparallelen Thyristoren 2 und 3 angeordnet. Diese Thyristoren steuern die Umschaltung der z.B. vom Netz 4 kommenden Wechselspannung und der Wechselspannung, die von einer zweiten Spannungsquelle 5 oder 11 herrührt. Die beiden Spannungsquellen 4 und 5 bzw. 11 sind über Leitungen 6 und 7 mit dem Verbraucher 8 verbunden. Die Wirkungsweise der Umschaltung von der ersten Spannungsquelle 4 auf die zweite Spannungsquelle 5, 11 und umgekehrt, z.B. bei Ausfall der ersten Spannungsquelle, wird hier nicht näher beschrieben, da sie nicht Gegenstand der Erfindung ist, die ausschliesslich auf die Steuerschaltung gerichtet ist. Diese Steuerschaltung, die im Zusammenhang mit der Fig. 2 näher beschrieben wird, arbeitet in der Weise, dass eine Umschaltung zwischen den beiden Spannungsquellen 4 und 5 erfolgen kann trotz unterschiedlicher Frequenzen, Spannungsamplituden und Spannungsformen. Als unterschiedliche Spannungsformen werden sinusförmige, dreieckförmige, sägezahnförmige, trapezförmige, rechteckförmige usw. Wellenzüge verstanden. Jede denkbare Spannungsform kann mit einer anderen zusammenarbeiten. So können z.B. Wechselspannungen mit einem dreieckförmigen und einem rechteckförmigen Wellenzug umgeschaltet werden. Es existieren keine Einschränkungen über die Zusammenarbeit von bestimmten Wellenzügen bzw. Spannungsformen. Unter unterschiedlicher Spannungsamplitude soll eine verschiedene Höhe der Spannungen der beiden Spannungsquellen 4 und 5 gemeint sein. Die Frequenzen der beiden Wechselspannungen können ebenfalls unterschiedlich sein, und zwar in einem Verhältnis von 1/2 (z.B. 50Hz/100Hz) oder 1/3 (z.B. 60Hz/180Hz) oder 1/3 (50Hz/150Hz). Es können ohne weiteres andere Frequenzen und Verhältnisse genommen werden. Die beiden Frequenzen müssen jedoch ein ganzzahliges Verhältnis aufweisen. Wesentlich hierbei ist, dass die beiden Wechselspannungen in bestimmten Nulldurchgängen gleiche Vorzeichen des Gradienten bzw. der Inklination aufweisen müssen. Je nach Verhältnis der verwendeten Frequenzen haben diese Nullstellen einen kleineren oder grösseren Abstand voneinander. Zur besseren Definition der gemeinsamen Nullstellen, in denen die Wechselspannungen gleiche Vorzeichen des Gradienten bzw. der Inklination haben, wird im folgenden der Ausdruck Synklinisation benutzt. Die beiden Wechselspannungen werden in diesen gemeinsamen Nullstellen zur Synklinisation d.h. zur Übereinstimmung gebracht. Wenn die Übereinstimmung vorhanden ist, wird sie aufrechterhalten. Die gemeinsamen Nullstellen liegen im ersten Beispiel (50Hz/100Hz) bei jedem vierten Nulldurchgang, im zweiten Beispiel (60Hz/180) bei jedem dritten Nulldurchgang und im dritten Beispiel (50Hz/150Hz) bei jedem sechsten Nulldurchgang der höheren Frequenz.

Gemäss Fig. 1 empfängt die Steuerschaltung 1 über Leitung 9 die Spannung aus der ersten Spannungsquelle 4, die im vorliegenden Beispiel das normale Stromversorgungsnetz sein soll. Ferner empfängt die Steuerschaltung 1 über die Leitung 10 die Wechselspannung der zweiten Spannungsquelle 5. Diese zweite Spannungsquelle kann ein Turbogenerator 5 oder ein Inverter 11 sein. Bei Verwendung eines Inverters werden eine Pufferbatterie, ein Gleichrichter sowie eine Zuleitung benötigt. Dies ist jedoch bekannt und ist in der Fig. 1 daher nur durch einen gestrichelten Block 11 symbolisiert. Nun zurück zur Steuerschaltung 1. Diese arbeitet in der Weise, dass die Synklinisationspunkte der beiden Wechselspannungen erfasst werden. Sollten sich durch unerwünschtes relatives Verschieben zwischen den beiden Frequenzen solche Synklinisationspunkte nicht ergeben, so erzeugt die Steuerschaltung 1 über die Leitung 12 Ausgangssignale, die die Frequenz der Spannungsquellen 5 bzw. 11 relativ zur Frequenz der Wechselspannungsquelle 4 so lange verschieben, bis die gemeinsamen Nulldurchgänge vorhanden sind. In diesem Zusammenhang wird darauf hingewiesen, dass eine solche relative Verschiebung der Frequenzen der beiden Wechselspannungen ohne weiteres möglich ist, obwohl die Frequenz jeder einzelnen Wechselspannung konstant gehalten wird. Ferner werden die Signale aus den Sensorleitungen 9 und 10 in der Steuerschaltung 1 so verarbeitet, dass die antiparallelen Thyristorschaltungen 2, 3 über die Leitungen 13 und 14 nur in den Synklinisationspunkten kommutieren können. Wenn also bei der in Fig. 1 gezeigten Stromversorgungsanlage die eine Spannungsquelle 4, die das Netz darstellen soll, unterhalb eines tolerierbaren Spannungswertes sinkt, wird die andere Spannung aus den Spannungsquellen 5 bzw. 11 mittels der Tyristoren 3 und über die Leitung 7 auf den Verbraucher 8 geschaltet. Die Thyristoren 2 trennen die Spannung des Netzes 4 vom Verbraucher. Wenn die Netzspannung wieder ihren gewünschten Wert erreicht hat, erfolgt die Rückschaltung des Verbrauchers 8 auf das Netz. Hierbei trennen die Thyristoren 3 die Spannungsquelle 5 bzw. 11 vom Verbraucher.

Der Verbraucher kann jede bekannte Form haben. Er kann eine Computer-Anlage oder unterbrechungsempfindliche Beleuchtungskörper oder Motoren mit wichtigen Funktionen darstellen. Wenn z.B. bei einem solchen Motor die Drehzahl zu ändern ist, so kann dies ohne weiteres in der Weise erfolgen, dass die Spannungsquelle mit der höheren oder der niedrigeren Frequenz auf den Motor geschaltet und die andere Spannungsquelle abgeschaltet wird.

Wenn die zweite Spannungsquelle 5 bzw. 11 eine höhere Frequenz besitzt als die erste Spannungsquelle 4 und auf den Verbraucher geschaltet wird, so ergibt sich ein entsprechend kleinerer Stromverbrauch für den Verbraucher 8. Dies ist besonders bei Notstrombeleuchtung im Falle eines Netzausfalles vorteilhaft. Hierdurch kann der Betrieb durch den Inverter 11 mit Pufferbatterie eine längere Zeit aufrechterhalten werden.

Die Steuerschaltung 1, die auch als Synklinisator bezeichnet werden kann, wird nun anhand der Figuren 2a, 2b näher beschrieben. Die Spannung der Quelle 4 gelangt über die Leitung 9 auf einen Transformator 20, der die Spannung von z.B. 220 Volt auf 9 Volt heruntertransformiert. Die Phase dieser Spannung wird im folgenden Phasenschieber 21 um 90° verschoben und gelangt auf einen Vergleicher 22, der die sinusförmige Spannung in einen Rechteckimpuls umwandelt. Dieser Rechteckimpuls gelangt über die Leitung 23 auf den einen Eingang des exklusiven ODER-Gatters 24. Die gleiche Spannung gelangt über den Detektor 25, der die Nulldurchgänge der Spannung aus der Quelle 4 erfasst. Diese Nulldurchgänge gelangen auf den nachfolgenden Detektor 26, der nur die Führungskante der Nulldurchgangsimpulse festhält. Diese werden auf einen Eingang des Flip-Flops 27 vom D-Typ gegeben. Die bis jetzt beschriebenen Bauteile erfassen die Nulldurchgänge der Wechselspannung aus dem Netz 4. Der im folgenden erwähnte Stromkreis erfasst die Nulldurchgänge der Wechselspannung aus dem Generator 5 bzw. Inverter 11 der Fig. 1. Es sei angenommen, dass die Frequenz dieser Spannung dreimal höher sei als die Frequenz aus dem Netz 4. Die Spannung wird über Leitung 10 auf einen Transformator 20' gebracht, der in gleicher Weise wie bereits oben beschrieben die Wechselspannung von z.B. 220 Volt auf 9 Volt heruntertransformiert. Diese Wechselspannung gelangt auf den Vergleicher 30, der ihren Wellenzug in eine Rechteckform umwandelt. Im folgenden Detektor 31 werden die Nulldurchgänge der Spannung des Generators 5 bzw. des Inverters 11 erfasst und als Impulse auf einen nachfolgenden Frequenzteiler 32 gegeben. Da definitionsgemäss die Frequenz der Wechselspannung des Generators 5 bzw. des Inverters 11 dreimal höher ist, dividiert das Bauteil 32 die Frequenz durch 3. Der Frequenzteiler 32 gibt jeden dritten Nulldurchgang der Wechselspannung über Leitung 33 auf den zweiten Eingang des exklusiven ODER-Gatters 24. Das exklusive ODER-Gatter erzeugt an seinem Ausgang nur dann Impulse, wenn nur an einem der beiden Eingänge ein Impuls liegt. Dieser Fall tritt ein, wenn die Nulldurchgänge der beiden Wechselspannungen nicht zusammenfallen. In diesem Falle wird ein sogenanntes Fehlersignal über den geschlossenen Schalter 28 und Leitung 12 auf den Frequenzregler des Generators 5 bzw. Inverters 11 gegeben. Der Schalter 28 wird durch Flip-Flop 27 vom D-Type geöffnet und geschlossen. Das Fehlersignal veranlasst den Frequenzregler 15 dazu, dass die Nulldurchgänge der beiden Wechselspannungen sich annähern und definierte Synklinisationspunkte bilden. Wie bereits erwähnt, sind diese Synklinisationspunkte solche Nulldurchgänge, in denen die Inklination und der Gradient der beiden Wechselspannungen das gleiche Vorzeichen haben. Bei dem vorliegenden Beispiel ist angenommen worden, dass die Frequenz der Spannungsquelle 4 50 Hz und die Frequenz des Generators 5 bzw. des Inverters 11 150 Hz betragen soll. In diesem Fall ist jeder dritte Nulldurchgang der höheren Frequenz ein Synklinisationspunkt mit den geforderten Bedingungen. Wenn die Frequenz der Wechselspannung aus der Quelle 4 60 Hz und die der Quellen 5 bzw. 11 120 Hz beträgt, so ist jeder zweite Nulldurchgang der Wechselspannung mit der höheren Frequenz ein solcher Synklinisationspunkt. Bei einem Frequenzverhältnis von 2/3 (d.h. 60 Hz und 90 Hz) ist jeder sechste Nulldurchgang der höheren Frequenz ein solcher Synklinisationspunkt. Nun zurück zu der Steuerschaltung der Fig. 2. Es sei angenommen, dass das Fehlersignal über den geschlossenen Schalter 28 und Leitung 12 den Frequenzregler 15 so beeinflusst hat, dass die Wechselspannungen aus den Quellen 4 und 5 bzw. 11 gemeinsame Nullpunkte bzw. Synklinisationspunkte haben. In diesem Moment öffnet das Flip-Flop 27 vom D-Typ den Schalter 28, da das Flip-Flop 27 über die gemeinsamen Nullpunkte beider Wechselspannungen laufend orientiert wird. Dies erfolgt über den Nulldurchgangsdetektor 25 und Führungskanten-Detektor 26 der einen Wechselspannnung und Nullpunktdetektor 31, Frequenzteiler 32, Phasenschieber 34, Führungskantendetektor 35 der anderen Wechselspannung. Gleichzeitig legt Flip-Flop 27 Spannung über Leitung 29 an den einen Eingang des UND-Gatters 36.

Hierdurch wird der Stromkreis zur Kommutation von einer Wechselspannung, z.B. aus dem Netz 4, auf die andere Wechselspannung aus dem Generator 5 bzw. Inverter 11 vorbereitet. Der Gleichrichter 40 richtet die Wechselspannung aus der ersten Quelle 4 gleich. Wenn nun die Netzspannung durch irgendeinen Umstand absinken sollte, wird dies durch den Pegeldetektor 41 angezeigt, der Spannung an den einen Eingang des UND-Gatters 42 anlegt. Das UND-Gatter 42 gibt bei jedem Nulldurchgang der Spannung aus Quelle 4 einen Impuls über Leitung 43 auf den einen Eingang des ODER-Gatters 44. In diesem Fall gelangt die dreifache Frequenz der Spannung aus dem Generator 5 bzw. Inverter 11 auf den anderen Eingang des ODER-Gatters 44. Dies ist jedoch nur möglich, wenn die Spannung aus der Quelle 4 unter einen bestimmten Schwellwert absinkt und der Pegeldetektor 41 über Leitung 46 und Negation 45 eine Spannung an den einen Eingang des UND-Gatters 53 legt, so dass die Impulse, die die dreifache Frequenz der Spannung aus der Quelle 5 oder 11 repräsentieren, aus dem UND-Gatter 52 über den anderen Eingang des UND-Gatters 53 durchgelassen werden. Das UND-Gatter 52 kann dies tun, weil an seinem einen Eingang die Impulse der Nulldurchgänge aus dem Nulldurchgangsdetektor 31 und an seinem anderen Eingang der volle Pegel der Spannung aus der Quelle 5 oder 11 anliegt. Diese Spannung wird durch den Gleichrichter 50 gleichgerichtet. Der nachfolgende Pegeldetektor 51 erfasst den Pegel der gleichgerichteten Spannung.

Der Kommutierungsvorgang ist nur definiert durch Impulse, die das ODER-Gatter 44 aus Eingang a der Flip-Flop-Schaltung 37 gibt, und durch einen verringerten oder keinen Pegel der Spannung der Quelle 4 am Eingang b der Flip-Flop-Schaltung 37 und durch die Spannung auf Leitung 29, die am einen Eingang des UND-Gatters 36 anliegt. Die Impulse aus dem Gatter 44 steuern die Flip-Flop-Schaltung 37 so, dass bei jedem Synklinisationspunkt der Treiber 38 über Leitung 13 die Thyristoren 2 abschaltet und über Leitung 14 die Thyristoren 2 einschaltet. Diese Schaltungen werden synchron durchgeführt. Hierdurch wird die Quelle 4 vom Verbraucher 8 abgeschaltet und Quelle 5 oder 11 an den Verbraucher 8 angeschaltet. Diese Schaltungen liegen im Grössenbereich von 1-3 $\mu$ sec. Von diesen Umschaltungen merkt selbst der empfindlichste Verbraucher nichts.

Im folgenden wird die Umschaltung von der Quelle 5 oder 11 auf Quelle 4 beschrieben. Es sei angenommen, dass die Spannung der Quelle 4 wieder ihren normalen Pegel hat und mit der den Verbraucher 8 speisenden Spannung der Quelle 5 oder 11 gemeinsamen Nullpunkte bzw. Synklinisationspunkte hat. In diesem Fall liegt am ODER-Gatter 44 die Frequenz der Spannung der Quelle 4. Der Kommutierungsvorgang ist durch Spannung aus Flip-Flop 27 über Leitung 29 auf einen Eingang des UND-Gatters 36 vorbereitet. Die Flip-Flop-Schaltung 37 empfängt auf Eingang a die Impulse aus dem ODER-Gatter 44, die die Frequenz der Spannung der Quelle 4 repräsentieren. Der Eingang b hat ebenfalls Spannung. Im vorliegenden Beispiel ist die Flip-Flop-Schaltung so organisiert, dass die Spannung der Quelle 4 den Vorrang hat und dem Treiber 38 der Befehl erteilt wird, die Thyristoren 3 über Leitung 14 abzuschalten und die Thyristoren 2 über Leitung 13 einzuschalten. Hierdurch erfolgt die Umschaltung des Verbrauchers 8 von der Quelle 5 oder 11 auf Quelle 4. Die Flip-Flop-Schaltung 37 kann auch so organisiert sein, dass keine der Spannungsquellen 4, 5 oder 11 bevorzugt ist. In diesem Falle würde nur das Absinken oder Ausbleiben des Pegels derjenigen Spannung, die den Verbraucher 8 speist, den Kommutierungsvorgang starten.

Verbraucher, wie Quecksilberdampf-Mischlichtlampen oder Computeranlagen, reagieren empfindlich auf Spannungsschwankungen oder Spannungsausfälle. Durch die praktisch unterbrechungslose Umschaltung von einer Wechselspannungsquelle auf eine andere, die im Grössenbereich von 1-3 $\mu$ sec. liegt, gibt es keine Komplikationen beim Verbraucher. Hierbei können Wechselspannungen unterschiedlicher Frequenz, Wellenzüge und Amplitude zusammenarbeiten.

## Patentansprüche

1. Steuerschaltung für eine Einrichtung zum Kommutieren von Wechselspannungen einer ersten Spannungsquelle (4) auf eine zweite Spannungsquelle (5, 11) mit unterschiedlicher, ein ganzzahliges Verhältnis aufweisender Frequenz, unterschiedlicher Spannungsamplitude und unterschiedlicher Spannungsform, gekennzeichnet durch Detektoren (25, 26; 31, 35), die die Nulldurchgänge der Wechselspannungen der ersten und zweiten Spannungsquelle (4; 5, 11) erfassen, wobei ein Frequenzteiler (32) der Spannungsquelle mit höherer Frequenz zugeordnet ist, einen Stromkreis (24, 27, 28), der bei Nichtübereinstimmung der Nulldurchgänge der Wechselspannungen einzelne Übereinstimmungs-Nulldurchgänge durch relative Frequenzverschiebung bei der zuzuschaltenden Spannungsquelle erzeugt und bei jedem Übereinstimmungs-Nullpunkt ein Vorbereitungssignal auf nachgeordnete Steuerorgane (37, 38, 44, 53) gibt, die bei Veränderung der den Verbraucher (8) speisenden Wechselspannung der erster Spannungsquelle (4) nur in dem Übereinstimmungspunkt der Nulldurchgänge auf die zweite Spannungsquelle (5, 11) umschalten, welcher Übereinstimmungspunkt dem durch die Wechselspannungsänderung bedingten Umschaltebefehl folgt.

2. Steuerschaltung nach Anspruch 1, dadurch gekennzeichnet, dass die die Nulldurchgänge der Wechselspannungen der Spannungsquellen (4, 5, 11) erfassenden Detektoren (25, 31) und Pegeldetektoren (41, 51), die die Spannungen der Spannungsquellen (4, 5, 11) überwachen, mit Verknüpfungsschaltungen (42, 52) verbunden sind, welche bei Veränderung der den Verbraucher (8) speisenden Wechselspannung und bei vorgeschriebener Wechselspannung der zuzuschaltenden zweiten Spannungsquelle (5, 11) im Takte der gemeinsamen Nulldurchgänge Steuersignale auf eine Verknüpfung (44) geben zur Auslösung der Umschaltung von der ersten Spannungsquelle (4) auf die zweite Spannungsquelle (5, 11).

## Claims

1. Control circuit for an installation for the commutation of alternating voltages of a first voltage source (4) to a second voltage source (5, 11) with different frequency possessing an integer relationship, different voltage amplitude and different voltage form, characterized by detectors (25, 26; 31, 35) which detect the zero cross overs of the alternating voltages of the first and second voltage sources (4, 5, 11), and a frequency divider (32) is associated with the voltage source with higher frequency, a current circuit (24, 27, 28) which, on non-coincidence of the zero cross overs of the alternating current, generates individual coincidence-zero cross overs through relative frequency shift of the voltage source to be switched and with each coincidence null point delivers a preparatory signal to subsequently arranged control elements (37, 38, 44, 53) which upon changing of the alternating current of the first voltage source (4) supplied to the load (8) only switch over to the second voltage source (5, 11) at the coincidence point of the zero cross overs, which coincidence point follows the switch-over command governed by the change in the alternating voltage.

2. Control circuit according to claim 1 characterized in that the detectors (25, 31) which detect the zero cross overs of the alternating voltages of the voltage sources (4, 5, 11) and level detectors (41, 51) which monitor the voltages of the voltage sources (4, 5, 11) are connected to logic circuits (42, 52) which upon change of the alternating voltage powering the load (8) and with a predetermined alternating voltage of the second voltage source (5, 11) which is to be switched-in deliver control signals to a logic interconnection (44), in cycle with the common zero cross overs, for triggering the switching from the first voltage source (4) to the second voltage source (5, 11).

## Revendications

1. Circuit de commande pour un dispositif pour commuter des tensions alternatives d'une première source de tension (4) à une deuxième source de tension (5, 11) dont la fréquence différente est avec la première dans un rapport de nombres entiers et dont l'amplitude et la forme sont également différentes, caractérisé par des détecteurs (25, 26, 31, 35) qui déterminent les passages à zéro des tensions alternatives de la première et de la deuxième source de tension (4, 5, 11), un diviseur de tension (32) étant associé à la source de tension ayant la fréquence la plus élevée, par un circuit de courant (24, 27, 28) qui, lorsqu'il n'y a pas coïncidence des passages à zéro des tensions alternatives, produit, dans la source de tension qui doit être mise en circuit, des passages à zéro de coïncidence individuels par déplacement relatif de fréquence et, pour chaque point zéro de coïncidence, envoie un signal de préparation à des organes de commande (37, 38, 44, 53), situés en aval, qui, en cas de modification de la tension alternative de la première source de tension (4) alimentant l'appareil d'utilisation (8), n'effectuent la commutation à la deuxième source de tension (5, 11) qu'au point de coïncidence des passages à zéro, point qui exécute l'ordre de commutation résultant du changement de tension alternative.

2. Circuit de commande selon la revendication 1, caractérisé en ce que les détecteurs (25, 31) qui détectent les passages à zéro des tensions alternatives des sources de tension (4, 5, 11) et les détecteurs de niveau (41, 51) qui contrôlent les tensions des sources de tension (4, 5, 11) sont reliés à des circuits de connexion (42, 52) qui, lorsque la tension alternative qui alimente l'appareil d'utilisation (8) se modifie et lorsque la tension alternative de la deuxième source de tension (5, 11) qui doit être mise en circuit à la valeur voulue, émettent, au rythme des passages à zéro communs, des signaux de commande envoyés à une connexion (44) pour provoquer la commutation de la première source de tension (4) à la deuxième source de tension (5, 11).

FIG. 1

FIG. 2a

FIG. 2b